(19) Europäisches Patentamt
European Patent Office
Office européen des brevets

(11) **EP 3 032 291 A1**

(12) **EUROPEAN PATENT APPLICATION**

(43) Date of publication:
**15.06.2016   Bulletin 2016/24**

(51) Int Cl.:
***G02B 1/00*** (2006.01)

(21) Application number: **15198772.4**

(22) Date of filing: **09.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **12.12.2014   BY 20140450**

(71) Applicants:
• **The State Scientific Institution "B.I. Stepanov Institute of Physics of National Academy of Sciences of Belarus"**
**220072 Minsk (BY)**
• **King Abdulaziz City for Science and Technology**
**11442 Riyadh (SA)**

(72) Inventors:
• **MUKHUROV, Nikolai Ivanovich**
**220072 Minsk (BY)**
• **BINHUSSAIN, Mohammed**
**11442 Riyadh (SA)**
• **ALSHAMMARI, Marzook Saleh**
**11442 Riyadh (SA)**
• **ALARIFI, Hani Abdulkareem**
**11442 Riyadh (SA)**
• **GASENKOVA, Irina Vladimirovna**
**220072 Minsk (BY)**
• **KAZAK, Nikolai Stanislavovich**
**220072 Minsk (BY)**
• **BELYI, Vladimir Nikolaevich**
**220072 Minsk (BY)**

(74) Representative: **Gulde & Partner**
**Patent- und Rechtsanwaltskanzlei mbB**
**Wallstraße 58/59**
**10179 Berlin (DE)**

(54) **HYPERBOLIC METAMATERIAL FOR AN OPTICAL SPECTRAL RANGE**

(57)   The invention relates to the area of metamaterials of the optical region of wavelengths and can be applied for creation of artificial materials changing the features in optical region of wavelengths.

The technical task of the invention is the widening of the working region of wavelengths due to periodic system of nanorods in a definite range of diameters and heights. The hyperbolic metamaterial (10) of the invention is applicable for electromagnetic radiation in an optical spectral range. The metamaterial (10) comprises a dielectric substrate (1) having a periodic system of nanoholes (2) distributed over a surface of the dielectric substrate (1) and nanorods (4) of a noble metal (3) at least partially filling the nanoholes (2), characterized in that the nanoholes (2) have diameters (d) varying from 30 nm to 50 nm, the nanorods (4) have a height (l) in the range of from 3 to 10 times of the diameters (d), wherein the nanorods (4) are located at a surface of the substrate (1) which is exposable to a source of electromagnetic radiation (5).

Fig. 2

**Description**

The construction of hyperbolic metamaterial relates to the area of metamaterials of the optical region of wavelengths and can be applied for creation of artificial materials changing the features in optical region of wavelengths.

Two constructions of metamaterial are known, which are to be used for the operation in an optical region of wavelengths [W. Cai and V. Shalaev. Optical Metamaterials: Springer, 2010]. These constructions comprise an interchange of layered metal-dielectric nanostructures and a medium on the basis of ordered unidirectional nanorods.

Each of these constructions has been calculated for a narrow region of wavelengths.

The medium of metal nanorods formed by filling with metal of dielectric matrix, first of all matrix of nanoporous anodic aluminum oxide (AAO) filled with noble metal [Constantin R. Simovski, Pavel A. Belov, Alexander V. Atrashchenko, and Yuri S. Kivshar. Wire Metamaterials: Physics and Applications // Adv. Mater. 2012, p.1-20], is the closest on construction. But like other constructions this one is calculated for a narrow working region of wavelengths.

The technical problem of the invention is to provide a metamaterial based on a periodic system of nanorods having a widened working region of wavelengths.

The solution of the technical problem is achieved by a hyperbolic metamaterial for electromagnetic radiation in an optical spectral range. The metamaterial comprises a dielectric substrate having a periodic system of nanoholes distributed over a surface of the dielectric substrate and nanorods of a noble metal at least partially filling the nanoholes. The nanoholes have diameters $d$ varying from 30 nm to 50 nm, the nanorods have a height (or length) $l$ in the range of from 3 to 10 times of the diameters $d$, wherein the nanorods are located at a surface of the substrate which is exposable to a source of electromagnetic radiation.

Thus the construction of the hyperbolic metamaterial for electromagnetic radiation in an optical spectral range contains a dielectric substrate with a periodic system of nanoholes along the whole area of the surface filled with noble metals. Nanoholes with the diameters from 30 up to 50 nm are filled with noble metals forming nanorods with the height from 3 up to 10 diameters of nanorods from the side of the surface turned toward the source of electromagnetic radiation and dielectric substrate has the thickness not less than 30 $\mu$m.

The combination of the pointed features provides the widening of a working region of wavelengths of the construction of hyperbolic metamaterial, wherein the properties appear of metamaterial due to the presence of evenly distributed on the whole volume of alumina oxide substrate periodic nanopores with the diameters within the range from 30 up to 50 nm filled with noble metal, which forms the system of metal nanorods with the height from 3 up to 10 diameters of pores in a dielectric substrate.

The periodic system of nanoholes may comprise rows of nanoholes having a uniform diameter. That is, each nanohole of one row has the same diameter selected in the range of 30 to 50 nm.

The periodic system of nanoholes may further comprise a set of rows of uniform nanoholes having a different diameter, wherein the set of rows is periodically repeated. That is a number of rows of nanoholes is provided, wherein each row has nanoholes of a uniform diameter, but the diameter varies from row to row. The rows of different nanoholes are periodically repeated over the substrate. For instance, there may be provided a set of three rows, with a first row having nanoholes of a first diameter $d_1$, a second row having nanoholes of a second diameter $d_2$, and a third row having nanoholes of a third diameter $d_3$, with $d_1$, $d_2$, $d_3$, being selected in the range of 30 to 50 nm; wherein these rows are repeatedly distributed over the surface of the matrix substrate (1st row, 2nd row, 3rd row, 1st row, 2nd row, 3rd row,...).

The dielectric substrate preferably has a thickness of at least 30 $\mu$m.

The dielectric substrate is formed of a ceramic material, for instance of aluminum oxide ($Al_2O_3$), particularly of anodic aluminum oxide.

The noble metal may be selected from silver, gold, and copper or others. The noble metal may be present in the nanoholes in form of particles or as solid cylindrical bodies.

The invention is further described in preferred embodiments by means of the following Figures:

Figure 1 shows a perspective schematic view of the construction of a hyperbolic metamaterial according to the invention;

Figure 2 shows a cross-section of the hyperbolic metamaterial according to section A-A of Fig. 1;

Figure 3 shows the dependency of the wavelength of plasmon resonance $\lambda_0$ as a ratio function of the ratio $l/2r_0$ at various radiuses $r_0$ of the nanorods;

Figure 4 shows the dependency of the resonance wavelength $\lambda_0$ of the diameter of the nanorods at various values of geometrical parameter $\kappa = l/2r_0$.

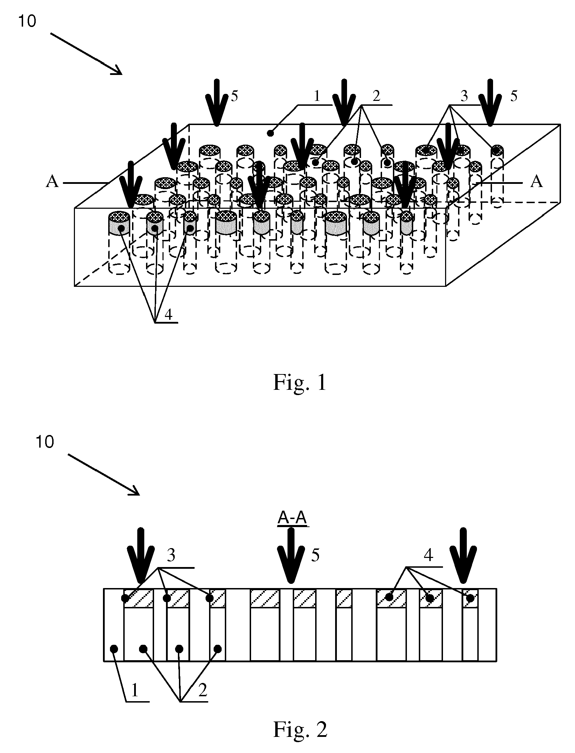

The essence of the invention is given in Figs. 1 and 2.

The hyperbolic metamaterial 10 contains a dielectric substrate 1, having a film like structure. The dielectric substrate 1 is provided with a periodic system of nanoholes 2 distributed over substantially the whole area of the substrate 1. The nanoholes 2 are arranged parallel to each other and substantially vertical to the flat surface area of the substrate 1. The nanoholes 2 are arranged in rows extending parallel to each other, wherein the nanoholes 2 of each row have the same diameter $d$ or radius $r_0$. As can be seen in Fig. 2 showing a cross-section along line A-A in Fig. 1, the rows of uniform nanoholes 2 are arranged in a regular pattern, wherein, a sequence of different rows is periodically repeated. In the present example, there is provided a set of three rows having nanoholes 2 of three different diameters which are regularly repeated.

The hyperbolic metamaterial 10 further comprises a noble metal 3 partially filling the nanoholes 2, thus forming nanorods 3 disposed within the nanoholes 2. The nanorods 3 are located at that surface of the dielectric substrate 1, which is exposed to an incident electromagnetic radiation 5 emitted from a source.

That is, the nanorods 4 are disposed on the side of the surface of dielectric substrate 1 turned toward the source of electromagnetic radiation 5. In this way, a substantially even surface is provided comprising the dielectric material of the matrix substrate 1 and alternatingly arranged metal surfaces of the nanorods 4.

The construction of hyperbolic metamaterial thus consists of the dielectric substrate 1 and the system of alternating nanoholes 2 with various diameters $d$ filled with noble metal 3. The dielectric substrate 1 is made of anodic aluminum oxide ($Al_2O_3$) and has a periodic system of nanoholes 2 arranged parallel to each other with the diameter from 30 up to 50 nm (Fig. 2), which are filled with the particles of noble metal 3 forming the periodic system of nanorods 4 in the upper part of the dielectric substrate 1 turned toward the source of electromagnetic radiation 5. The height $l$ of nanorods 4 measured from the surface of the dielectric substrate 1 turned toward the source of electromagnetic radiation 5 is a value equal to 3-10 times of the diameters of nanorods 4. Due to the fulfillment of the construction in a form of periodic systems of alternating to perpendicular surfaces of the dielectric substrate 1 metal nanorods 4 with the diameters within the range from 30 up to 50 nm, where as a metal there are used noble metals and as a dielectric aluminum oxide, the widening of the working region of wavelengths of the construction of hyperbolic metamaterial is achieved. The results of the theoretical calculations set forth below allow to optimize the geometrical sizes of the periodic system of nanorods 4, including ones for definite noble metals 3.

Dielectric substrates 1 are manufactured of anodic aluminum oxide by the method of chemical oxidation of aluminum and have the periodic system of nanoholes 2, the diameters of which amount to from 30 up to 50 nm. Filling of nanoholes 2 with particles of noble metal 3 is conducted using electrochemical method allowing a high level of controlling the height of filling of separate nanoholes 2. To provide the efficient mechanical strength of the substrate of anodic aluminum oxide the thicknesses are formed not less than 30 $\mu$m.

Theoretical calculation of the construction of hyperbolic metamaterial.

It is known that at illumination of the system of metal rods by an incident light beam near every rod plasmon fields [S. A. Maier. Plasmonics: Fundamental and applications, Springer, New York, 2007] appear, which are the collective vibrations of electrons of conductivity and electric field. The maximal electric field is observed in conditions of plasmon resonance. Such resonance is accompanied by the essential strengthening of electrical field in near-surface area of nanorod.

Surface plasmons are the reason for appearing of negative refraction of composite materials created on the basis of ordered nanorods implemented into the dielectric matrix. One of perspective metamaterials of such a class is porous films of aluminum oxide $Al_2O_3$, pores of which are filled with noble metals (silver, gold, copper and so on). The conditions of appearing of plasmon resonances in the system of ordered nanorods (particularly, resonance wavelength) depends essentially on the parameter $\kappa=l/d$, i.e. ratio of length $l$ to its diameter $d$. The typical lengths of nanorods vary from 200 nm up to 1000 nm and their diameters - from 20 nm up to 70 nm. Such parameters of nanorods allow one to make the negative refraction in visible, near and mid IR-ranges of electromagnetic spectrum.

Physically transparent and suitable for calculation of wavelengths of plasmon resonance is the presentation of nanorod in a form of electrical chain containing inductance and capacitance [Cheng-Ping Huang, Xiao-Gang Yin, Huang Huang, and Yong-Yuan Zhu. Study of plasmon resonance in a gold nanorod with an LC circuit model // Optics Express, Vol. 17, Issue 8, pp. 6407-6413 (2009)]. At not very small distance between nanorods in $Al_2O_3$ matrix, every nanorod can be studied isolated from each other. Further let us examine the conditions of appearing of longitudinal resonance, when the electrical vector of the excited light wave is directed along the axis of nanorod having the length $l$ and radius $r_0$. It is also supposed that the nanorod radius is less than the depth $\delta$ of skin-effect ($r_0 < \delta$).

It is shown that the nanorod can be studied as $LC$ circuit having capacitance $C$ and inductance $L$. It is connected with the fact that under the influence of the electrical field of light wave in the nanorod the electrical current $I$ arises, which is accompanied by the magnetic field being proportional to the current. Here the energy of the magnetic field inside the nanorod is essentially smaller than the energy outside the nanorod covering the cylinder hole with the length $l$ and also internal radius $r_0$ and external radius $l/2$. From the equality of the energy of the magnetic field in the cylinder area to the full energy $W = LI^2/2$, the expression for self-inductance $L$ follows:

$$L = \frac{l}{c^2} \ln\left(\frac{l}{2r_0}\right), \tag{1}$$

which is mainly determined by the nanorod length $l$.

Under the influence of alternating electric field $\omega$ of light wave the nanorod preserves the variable resistance $R = R_0 - i\omega L_0$, where $R_0 = l/\sigma_0 s$ ($\sigma_0$ - is the conductivity, $s$ - is the area of nanorod section), and $L_0 = 4\pi l / c^2 K_p^2 s$ — is the traditional usual inductance, here $K_p = \omega_p / c$, $\omega_p$ - is the volume plasmon frequency.

Thus, the presence of variable resistance of the nanorod can be studied as consequent inclusion of constant resistance $R_0$ and usual inductance $L_0$, which is inversely to the area of transverse section of the nanorod. As a consequence of appearing of the alternating current at the ends of nanorod electrical charge $\pm q$ of the inverse sign is induced. That is why the nanorod can be studied as a capacitor preserving effective capacitance $C$:

$$C = \frac{1}{4}\alpha\varepsilon_d r_0, \tag{2}$$

where $\alpha$ is the correcting factor taking into account inhomogeneity of distribution of charge at the ends of nanorod and being equal to approximately $\alpha = 2.5$ [Cheng-Ping Huang, Xiao-Gang Yin, Huang Huang, and Yong-Yuan Zhu. Study of plasmon resonance in a gold nanorod with an LC circuit model // Optics Express, Vol. 17, Issue 8, pp. 6407-6413 (2009)]. It follows from Eq. (2) that electro-capacitance of the nanorod depends on its radius and dielectric permittivity of the environment.

Thus, according to Eqs. (1) and (2) the influence of electric field on nanorod can be presented within the model of $LC$ electrical circuit having definite inductance and electro-capacitance. In such a circuit electromotive force (EMF) $E = I (R - i\omega L + i/\omega C)$ arises determined by electrical field $E$ of incident light wave: $E = \int E dl = El$. As on the opposite sides of the nanorod variable in time charges arise with the contrary sign $\pm q$, then this nanorod is equivalent to the electric dipole with dipole momentum $p=ql$. Using the Ohm laws and equations for current $I=dq/dt$ it is possible to obtain equation for dipole momentum of the nanorod:

$$p = \frac{A}{\omega_0^2 - \omega^2 - i\eta\omega} E \tag{3}$$

where $A=l^2/(L_0+L)$, $\omega_0 = 1/\sqrt{(L_0 + L)C}$, $\eta = R_0 /(L_0 + L)$. From Eq. (3) it follows that the excited nanorod can be studied as a resonator with the Lorentz contour.

According to Eq. (3) the frequency $\omega_0$ of plasmon resonance is determined through the inductance $L_0$, $L$ and electro-capacitance $C$ in the following way:

$$\omega_0 = \frac{1}{\sqrt{(L_0 + L)C}}. \tag{4}$$

From Eq. (4) the expression follows for the length of light wave $\lambda_0$ $\lambda_0 = \frac{2\pi c}{\omega_0}$, on which the plasmon resonance is realized:

$$\lambda_0 = \pi n_d \sqrt{10\kappa(2\delta^2 + r_0^2 \ln \kappa)}, \tag{5}$$

where $n_d$ is the refraction index of the surrounding dielectric, $\kappa=l/2r_0$, $\delta = c / \omega$ - is the depth of skin-effect for metal.

For nanorod of silver ($\omega_p =1.39 \times 10^{16} c^{-1}$) we have for the depth of skin-effect $\delta = 21.6$ nm.

It follows from Eq. (5) that $\lambda_0$ is the nonlinear function of the parameter $\kappa$ [Cheng-Ping Huang, Xiao-Gang Yin, Huang Huang, and Yong-Yuan Zhu. Study of plasmon resonance in a gold nanorod with an LC circuit model // Optics Express, Vol. 17, Issue 8, pp. 6407-6413 (2009)].

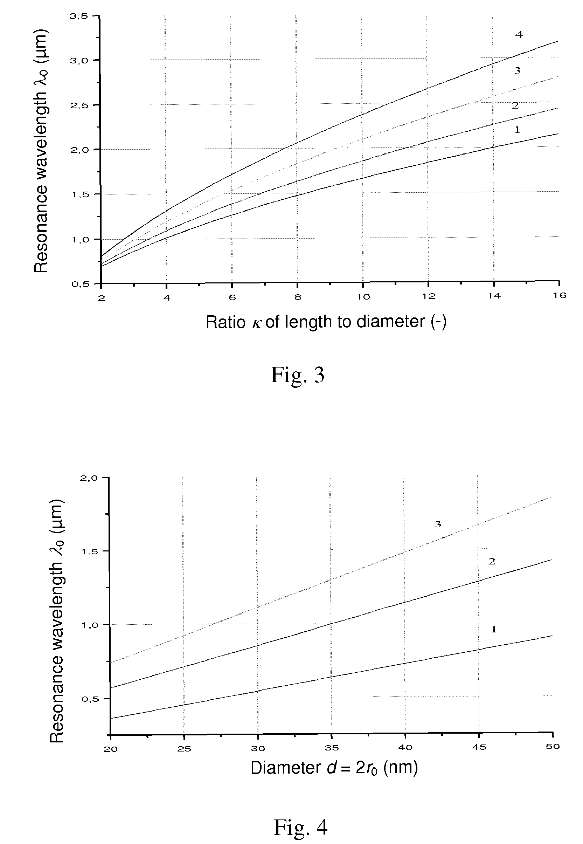

Using Eq. (5) the resonance wavelengths $\lambda_0$ have been calculated. Dependences of the wavelength of plasmon resonance $\lambda_0$ as a function of ratio $l/2r_0$ at difference radiuses of the nanorod $r_0$ are shown in Fig. 3.

The dependence of resonance wavelength $\lambda_0$ on parameter $\kappa = l/2r_0$ at various diameters $2r_0$ of nanorods of silver in $Al_2O_3$ matrix 1 - $2r_0$=20 nm, 2 - $2r_0$=30 nm, 3 - $2r_0$=40 nm, 4 - $2r_0$ = 50 is shown in Fig. 3.

Fig. 4 shows that at ratio of nanorod length to its diameter equal to three or less the resonance length of the plasmon is realized in the visible region of the optical range for diameters of nanorods from 20 up to 40 nm. For values $\kappa = l/2r_0$ within 8 - 12, the resonance wavelength of plasmon exists in near IR-region (from 1.5 $\mu$m up to 2.5 $\mu$m) for diameters of nanocylinders from 20 up to 50 nm. Principally, using dependences in Fig. 4 it is possible to determine the wavelength of plasmon resonance for the system of isolated nanorods of silver for any before-set ratio of nanocylinder length to its diameter.

The dependence of resonance wavelength $\lambda_0$ on the diameter $2r_0$ of nanorod of silver in $Al_2O_3$ matrix at various values of geometrical parameter $\kappa$: 1 - $\kappa$=4; 2 - $\kappa$=7 3 - $\kappa$=10 is shown in Fig. 4.

The dependence of the resonance wavelength on the diameter of nanocylinder at various values of geometrical parameter $\kappa$ is shown in Fig. 4.

In its turn the plots in Fig. 5 allow one to determine the wavelength of plasmon resonance of two-dimensional array of nanorods for any set diameter ranging from 20 up to 50 nm.

The direction of electromagnetic radiation 5 from the side of the surface of dielectric substrate 1, on which the faces of metal nanorods 4 emerge, does not make weaker the input signal unlike the variant with the direction of electromagnetic radiation 5 from the side of the surface with unfiled with noble metal 3 nanopores 2. In the last case essential weakening of electromagnetic radiation 5 will be observed.

It is determined experimentally that the fulfillment of the dielectric substrate 1 with the thickness not less than 30 $\mu$m provides necessary mechanical strength of the construction of metamaterial.

## REFERENCE SIGNS

10     hyperbolic metamaterial
1      dielectric substrate
2      nanoholes
3      noble metal
4      nanorods
5      electromagnetic radiation

## Claims

1. Hyperbolic metamaterial (10) for electromagnetic radiation in an optical spectral range, the metamaterial (10) comprising a dielectric substrate (1) having a periodic system of nanoholes (2) distributed over a surface of the dielectric substrate (1) and nanorods (4) of a noble metal (3) partially filling the nanoholes (2), **characterized in that** the nanoholes (2) have diameters (d) varying from 30 nm to 50 nm, the nanorods (4) have a height (*l*) in the range of from 3 to 10 times of the diameters (d), wherein the nanorods (4) are located at a surface of the substrate (1) which is exposable to a source of electromagnetic radiation (5).

2. Hyperbolic metamaterial (10) according to claim 1, wherein the periodic system of nanoholes (2) comprises rows of nanoholes (4) having a uniform diameter (d).

3. Hyperbolic metamaterial (10) according to claim 2, wherein a set of rows of uniform nanoholes (4) having a different diameter (*d*) is provided, wherein the set of rows is periodically repeated.

4. Hyperbolic metamaterial (10) according to any one of the preceding claims, wherein the dielectric substrate (1) has a thickness of at least 30 $\mu$m.

5. Hyperbolic metamaterial (10) according to any one of the preceding claims, wherein the dielectric substrate (1) is formed of aluminum oxide ($Al_2O_3$), particularly of anodic aluminum oxide.

6. Hyperbolic metamaterial (10) according to claim 5, wherein the noble metal is selected from silver, gold, and copper.

10

Fig. 1

10

A-A

Fig. 2

Fig. 3

Fig. 4

Europäisches
Patentamt

European
Patent Office

Office européen
des brevets

## EUROPEAN SEARCH REPORT

Application Number

EP 15 19 8772

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COLBY A. FOSS ET AL: "Template-Synthesized Nanoscopic Gold Particles: Optical Spectra and the Effects of Particle Size and Shape", JOURNAL OF PHYSICAL CHEMISTRY, vol. 98, no. 11, 1 March 1994 (1994-03-01), pages 2963-2971, XP055262808, US ISSN: 0022-3654, DOI: 10.1021/j100062a037 * page 2963; table 1 * * Experimental section; page 2965 - page 2966 * * page 2966, right-hand column * | 1-6 | INV. G02B1/00 |
| Y,D | CONSTANTIN R. SIMOVSKI ET AL: "Wire Metamaterials: Physics and Applications", ADVANCED MATERIALS, vol. 24, no. 31, 16 August 2012 (2012-08-16), pages 4229-4248, XP055262830, DE ISSN: 0935-9648, DOI: 10.1002/adma.201200931 * page 4235; table 1 * | 1-6 | TECHNICAL FIELDS SEARCHED (IPC) G02B |

-/--

The present search report has been drawn up for all claims

| Place of search | Date of completion of the search | Examiner |
|---|---|---|
| Munich | 5 April 2016 | Le Masson, Nicolas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

# EP 3 032 291 A1

Europäisches Patentamt
European Patent Office
Office européen des brevets

## EUROPEAN SEARCH REPORT

Application Number

EP 15 19 8772

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | Cheng-Ping Huang ET AL: "Study of plasmon resonance in a gold nanorod with an LC circuit model References and links 8 / OPTICS EXPRESS 6407", Adv.Mater. Nat.Mater. Adv. Mater. Laser Focus World J. Am. Chem. Soc. Appl. Phys. Lett. J.Appl.Phys. Appl. Phys. Lett. J. Phys. Chem. B Phys. Rev. Lett. IEEE Trans. Microwave Theory Tech. Science Opt. Lett. Phys. Chem.Chem. Phys, 1 January 2007 (2007-01-01), pages 1685-1706, XP055262831, Retrieved from the Internet: URL:https://www.osapublishing.org/DirectPD FAccess/FAFCC559-F38C-DF3B-E1A71B2211F0CCB 2_178933/oe-17-8-6407.pdf?da=1&id=178933&s eq=0&mobile=no * equation (4); page 6411 * | 1-6 | |

-----

TECHNICAL FIELDS SEARCHED (IPC)

The present search report has been drawn up for all claims

| Place of search | Date of completion of the search | Examiner |
|---|---|---|
| Munich | 5 April 2016 | Le Masson, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. CAI ; V. SHALAEV.** Optical Metamaterials. Springer, 2010
- **CONSTANTIN R. SIMOVSKI ; PAVEL A. BELOV ; ALEXANDER V. ATRASHCHENKO ; YURI S. KIVSHAR.** Wire Metamaterials: Physics and Applications. *Adv. Mater.,* 2012, 1-20

- **S. A. MAIER.** Plasmonics: Fundamental and applications. Springer, New York, 2007
- **CHENG-PING HUANG ; XIAO-GANG YIN ; HUANG HUANG ; YONG-YUAN ZHU.** Study of plasmon resonance in a gold nanorod with an LC circuit model. *Optics Express,* 2009, vol. 17 (8), 6407-6413